(19)

Europäisches
Patentamt
European
Patent Office
Office européen
des brevets

(11)  **EP 2 811 414 A2**

(12)  **EUROPEAN PATENT APPLICATION**

(43) Date of publication:
**10.12.2014  Bulletin 2014/50**

(51) Int Cl.:
**G06F 17/28** (2006.01)

(21) Application number: **14170998.0**

(22) Date of filing: **03.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.06.2013  US 201313908157**

(71) Applicant: **Xerox Corporation
Rochester, New York 14644 (US)**

(72) Inventors:
• **Mirkin, Shachar
  38240 Meylan (FR)**
• **Venkatapathy, Sriram
  38000 Grenoble (FR)**
• **Dymetman, Marc
  38000 Grenoble (FR)**

(74) Representative: **Skone James, Robert Edmund
Gill Jennings & Every LLP
The Broadgate Tower
20 Primrose Street
London EC2A 2ES (GB)**

(54)  **Confidence-driven rewriting of source texts for improved translation**

(57)    A method for rewriting source text includes receiving source text including a source text string in a first natural language. The source text string is translated (S208) with a machine translation system to generate a first target text string in a second natural language. A translation confidence for the source text string is computed (S210), based on the first target text string. At least one alternative text string is generated (S216), where possible, in the first natural language by automatically rewriting the source string. Each alternative string is translated (S218) to generate a second target text string in the second natural language. A translation confidence is computed (S220) for the alternative text string based on the second target string. Based on the computed translation confidences, one of the alternative text strings may be selected as a candidate replacement for the source text string and may be proposed to a user on a graphical user interface.

FIG. 5

**Description**

BACKGROUND

The exemplary embodiment relates to machine translation and finds particular application in connection with a system and method for preparing source text for improved translation quality.

While the quality of automatic translation is constantly improving, Machine Translation (MT) errors are still prevalent. The quality of translation is affected by many factors. One is the difficulty of translating between the source and the target languages. For example, translating from French to Japanese may be more difficult than translating from French to Italian due to the greater difference between the languages. Other factors include the amount of data available for training the translation model (in the case of Statistical Machine Translation, SMT) and the domain of the texts for translation (and their difference from the training data). Another factor relates to the specific source text itself, since some texts are more complex than others.

One way to address the translation of a difficult text would be to modify the source text prior to its translation. This process is referred to as pre-editing, the counterpart of post-editing, which involves correcting the translated text. One way to achieve this is by ensuring that the source text conforms to a constrained language. Experienced users of MT technology are starting to adapt work practices for writing texts in a way that will enable the MT system to translate them better. Guidelines for writing text that the machine can translate better include advice to keep sentences short, use grammatically correct sentences, and avoid ambiguous words.

While these guidelines are often effective methods to obtain better translations, most texts do not comply with them. Also, the person seeking a translation is often not the author of the text. In addition, existing methods generally overlook one aspect of the problem. Sentences may be difficult to translate because of intrinsic reasons (with respect to the source text), for example because the sentence is long, or contains complex syntactic structures. However, they may also be difficult to translate due to extrinsic reasons that depend on the capabilities of the specific MT system or the specific MT model being used to translate the text, e.g., due to the number of words that are unknown to the MT system that the source text contains. Many existing pre-editing methods only address the intrinsic reasons, i.e., the difficulty of the source text, but not the extrinsic ones - the translatability of the source text with respect to the MT system and the MT model. That is, they do not consider the actual system that will translate the text or the translation model it is using.

Since texts may be translated into several languages, they may be written to be better translatable in general. However, since the operation of each MT model is often not well understood, this can lead to poor quality translations in some cases.

There remains a need for a computer implemented system and method for pre-editing source text which results in improved translation quality.

BRIEF DESCRIPTION

In accordance with one aspect of the exemplary embodiment, a method for rewriting source text includes receiving source text comprising at least one source text string in a first natural language. The method includes, with a processor, translating each source text string with a machine translation system to generate a first target text string in a second natural language. A first translation confidence is computed for the source text string based on at least one feature that is based on at least one of the source text string and the first target text string. Provision is made for generating at least one alternative text string in the first natural language, which includes automatically rewriting the source text string. Each alternative text string is translated with the machine translation system to generate a respective second target text string in the second natural language. A second translation confidence is computed for the alternative text string based on at least one feature that is based on at least one of the alternative text string and the second target text string. The method further includes providing for selecting one of the alternative text strings as a replacement for the source text string in the source text, based on the computed first and second translation confidences.

In accordance with another aspect of the exemplary embodiment, a system for rewriting source text includes a rewriting component configured for receiving source text comprising a source text string in a first natural language and generating at least one alternative text string in the first natural language by rewriting the source text string. A translation requester is configured for requesting a first machine translation of the source text string and a second machine translation of the alternative text string. A confidence estimator estimates a translation confidence for the source text string and alternative text string. A selection component selects alternative text strings as replacements for source text strings or selects candidates for replacement of source text strings, based on the translation confidences. A processor implements at least one of the translation requester, confidence estimator, and selection component.

In accordance with another aspect of the exemplary embodiment, an interactive translation method includes receiving source text including at least one source text string in a first natural language and, with a processor, for each of the at least one source text string, translating the source text string with a machine translation system to generate a first target text string in a second natural language. A first translation confidence is computed for the source text string. Provision is made for retaining the source text string in the source text where the first translation confidence meets a confidence threshold and for generating at least one alternative text string in the first natural language based on the source text string where the first translation confidence does not meet the threshold. Each of the at least one alternative text string is translated with the machine translation system to generate a second target text string in the second natural language and a second translation confidence is computed for the alternative text string. Provision is made for retaining the source text string in the source text where the first translation confidence at least meets the second translation confidence of each of the at least one alternative text strings and for presenting at least one of the at least one alternative text strings to a user as a candidate for replacement of the source string in the source text otherwise. A translation of the source text is output, based on the source text strings that have been retained and the presented alternative source strings that have been selected by a user for replacement of a respective source string.

BRIEF DESCRIPTION OF THE DRAWINGS

FIGURE 1 is a schematic diagram illustrating aspects of the exemplary system and method;
FIGURE 2 is a functional block diagram of a system for rewriting text in accordance with one aspect of the exemplary embodiment;
FIGURE 3 is a screenshot of an example user interface for rewriting text;
FIGURE 4 is a flow chart illustrating a method for rewriting text in accordance with another aspect of the exemplary embodiment; and
FIGURE 5 is a more detailed flow chart illustrating the method for rewriting text.

DETAILED DESCRIPTION

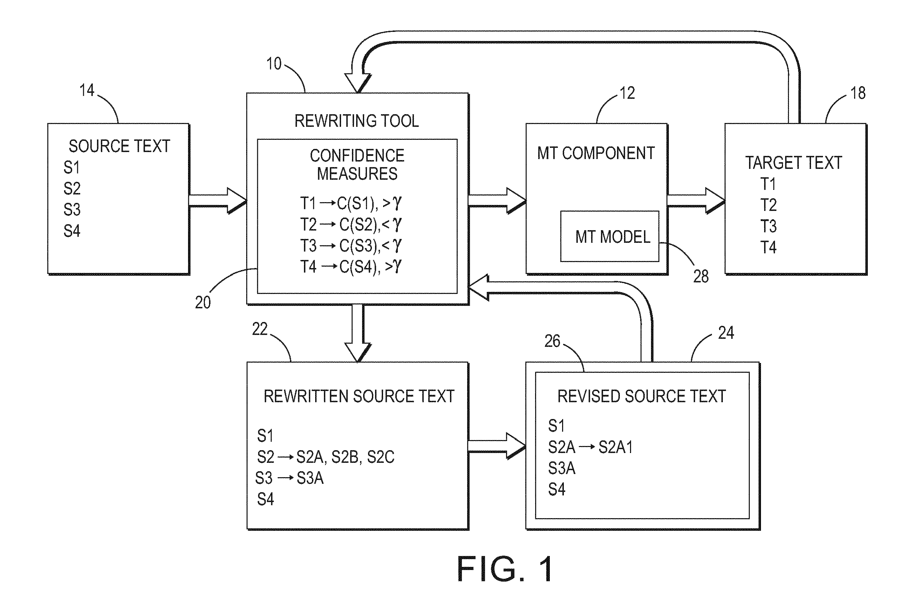

With reference to FIGURE 1, a source rewriting tool 10 facilitates obtaining higher translation quality by an associated machine translation (MT) component 12. Briefly, given an input document 14 to translate, each source sentence is translated by the MT component 12 to generate a corresponding target sentence of target text 18 and the confidence of each translation is assessed. Based on the confidence assessment, those source sentences for which the translations are predicted to be of poor quality are marked as candidates to be modified. The exemplary rewriting system has an interactive mode in which it suggests, to a user, alternative rewrites of the corresponding source sentence that can be translated by the MT system with a higher confidence. The user can then choose, from among the proposed rewritten sentences, the sentence that will eventually be translated. Alternatively, the user may decide to edit a suggested sentence further and may request that it be re-assessed by the system, or select the unmodified source sentence. This helps to ensure that the rewritten sentence is an appropriate replacement of the source (in terms of meaning - and in the context of the entire document).

As used herein a "text string" is a text sequence comprising a plurality of words and can be a sentence, ending with a period or similar termination punctuation mark, or a shorter (or longer) text string, such as a clause of a sentence or a phrase. While particular reference is made to sentences, it is to be appreciated that such other text strings are also contemplated.

For example, as illustrated in FIG. 1, the input document includes source text in a first natural language, such as French, which includes four source strings, such as sentences, denoted S1, S2, S3, and S4. The source language sentences are received by the rewriting tool 10 and sent to the MT component 12 for translation into text 18 in a second natural language, different from the first, such as English, in one example. Each source string is thus translated to a corresponding target string, denoted T1, T2, T3, T4. The target text strings are analyzed by the rewriting tool 10, which computes a translation confidence measure 20 for each source sentence (c(S1), c(S2), c(S3), c(S4)) which can be based, at least in part on the corresponding target string. For those source strings where the translation is predicted to be at or above a confidence threshold $\gamma$, the original source text is retained (S1 and S4, in the example). For those translations below the confidence threshold $\gamma$, the rewriting tool 10 modifies the original source strings (S2 and S3) to generate rewritten source text 22 comprising modified source strings (e.g., by generating S2A, S2B, and S2C from S2 and S3A from S3). The rewritten source sentence (S2A, S2B, S2C, S3A) is translated and its confidence computed, as for the original source sentence. In the case where a higher confidence is obtained for the rewritten source sentence, at least some of those that have a higher confidence than the original source are presented to the user, e.g., on a graphical user interface 24. The user may decide to accept one of two or more alternate source strings (S2A, S2B, S2C) that are presented, when two or more are proposed. Or, as illustrated, one of them (S2A) may be modified by the user to generate a new source string (S2A1). The user also has the option to modify the original source sentence or to reject a proposed rewritten source sentence. The revised source text 26 incorporating the user's selections and/or modifications may be returned to the rewriting tool and a new translation is generated by the MT component 12, if the revised source text 26 differs from the original source text 14.

Various methods can be used to generate rewritten source sentences. Among them, some entirely preserve the meaning of the sentence (i.e., paraphrase it) while some may generalize it or simplify it to achieve an easier-to-translate text. The control remains in the hands of the user to decide which, if any, of the suggested alternatives is suitable.

The interactive mode described above is one way to use the rewriting tool 10. In another mode of operation (automated mode), the rewriting process can be performed automatically, using high precision rewriting techniques. This can enable texts to be prepared for translation whenever a translation for a new language is required or whenever the MT model is updated. The exemplary tool can be configured to operate in only one of these modes or in both of these modes.

The exemplary rewriting tool 10 and method of using it support the preparation of a source text for translation based on the sentence-level translation confidence of the specific MT component 12 and the specific MT model 28 that it uses. Thus, in an exemplary embodiment, the tool is model-specific. The method may consider features of the source sentence and/or its translation in computing the translation confidence. The rewriting tool 10 enables a user who does not speak the target language to remain in full control of the changes that are made to the source text 14 prior to its translation, while being informed in real time about the translation confidence of the underlying MT component 12. Automatic rewriting methods are described below that are directed to confidence improvement while maintaining a fluent source text, without changing the original meaning of the source text too much. These rewriting techniques generalize or simplify the source text, in some cases, by removing some information from it. The tool can be implemented in software or hardware, or a combination thereof.

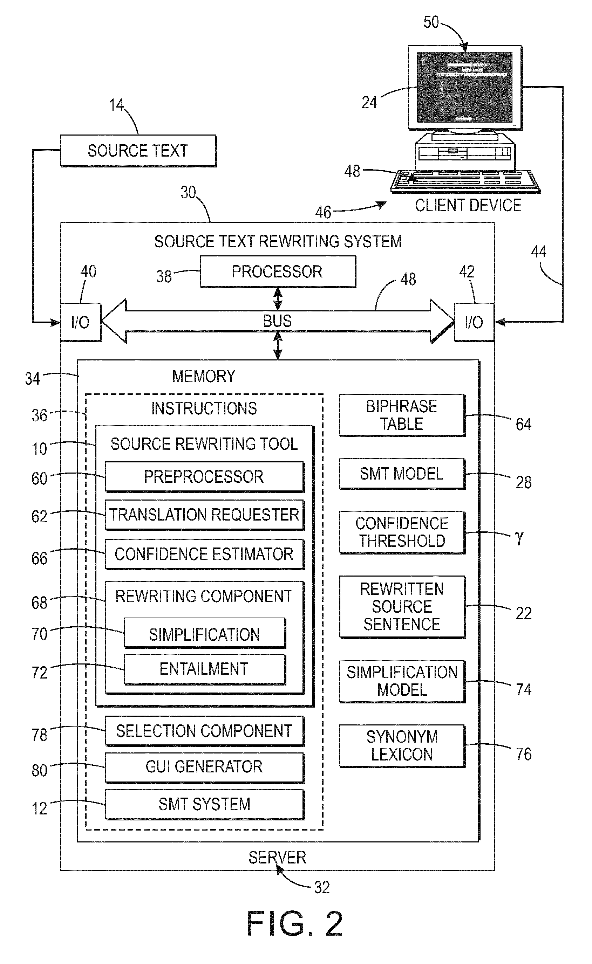

FIGURE 2 illustrates an exemplary computer-implemented system 30 for rewriting source text, which includes the exemplary tool 10. System 30 is implemented in one or more computing devices 32, such as a server, laptop, desktop, tablet, smartphone, combination thereof, or the like. Computer 32 includes memory 34 which stores instructions 36 for implementing the exemplary method and a processor 38 in communication with the memory 34 for implementing the instructions. An input device 40 receives source text 14 to be translated. An output device 42 is linked with the user interface 24, e.g., via a wired or wireless link 44, such as a local area network or a wide area network, such as the Internet. In the exemplary embodiment, the user interface 24 is hosted by a client device 46 which may be communicatively linked to the system 30 by a wired or wireless network, such as the Internet. Hardware components 34, 38, 40, 42 of the system 30 are communicatively linked by a data/control bus 48.

Client device 46 may be configured similarly to the server 32 and in some embodiments, may include some of the instructions for generating the graphical user interface 24 on an associated display device 50, such as an LCD screen. Inputs from a user, such as selection of alternative source strings and/or modifications, may be communicated to the processor 38, and may be received at the client device via a user input device 52, such as a keyboard, keypad, touchscreen, or the like.

In addition to the source rewriting tool 10, the exemplary memory 34 stores the machine translation component 12, such as a statistical machine translation (SMT) system. In one exemplary embodiment, the translation component 12 is treated essentially as a black box. In some embodiments, the machine translation component 12 may be located on a remote computer and called on for translations.

The text 14 to be translated may be received from any suitable source, such as client device 46, a webpage, a portable or remote memory storage device, a voice-to-text converter, or may be generated on the computer 32 itself.

The illustrated tool 10 includes a preprocessor 60 which receives input source text 14 in a first language and splits the text into a set of text strings, such as sentences S1, S1, S3, etc., and partitions each of the sentence into words (and other tokens). Other preprocessing may be performed, such as OCR processing in the case of scanned documents or PDF files.

A translation requester 62 calls on the translation component 12 to translate each sentence in turn. In the case of an SMT system 12 for example, the SMT system includes a decoder which accesses a biphrase table 64, e.g., stored in memory 36, which stores a set of biphrases. Each biphrase includes a source phrase of one or more words in the source language and a target phrase of one or more words in the target language, which is a translation of the source phrase that may have been derived from a corpus of parallel sentences in the source and target languages. The decoder retrieves biphrases which each cover one or more words of the source sentence. A set of the biphrases, which in combination cover the source sentence, is scored with the machine translation model 28, such as a log linear model which is a weighted combination of features. A highest scoring translation (or in some cases, more than one high scoring translations) according to the model 28 is output and returned to the source rewriting tool 10.

A confidence estimator 66 estimates a translation confidence for each sentence in the source text by computing a translation confidence measure $c(S1)$, $c(S2)$, $c(S3)$, etc. The translation confidence may be based on one or more of the respective translated sentence, the source sentence, and features of the translation process. For a source sentence which has a low computed translation confidence, e.g., which is below the confidence threshold $\gamma$, the source sentence

is input to a rewriting component 68, which generates one or more rewritten (alternative) source sentences. If the translation confidence measure (computed in the same manner as for the original source sentence) for the rewritten sentence is higher than for the original source sentence, the rewritten sentence may be proposed to the user as a candidate for replacement of the original source sentence.

The exemplary rewriting component 68 includes one or both of a text simplification component 70 and a text entailment component 72, which may operate separately or in combination to generate a rewritten sentence in the source language given an input source sentence. The exemplary text simplification component 70 may employ a simplification model 74 (similar to a translation model) which has been learned from a parallel training corpus of source language sentences and simplified versions of the source language sentences, as described in further detail below. The text simplification component 70 may additionally or alternatively employ a synonym lexicon 76 which includes source language words and simplified (easier to translate) synonyms of the source language words, or other synonym resource, such as WordNet.

A selection component 78 selects alternative source sentence(s) for replacing original ones. In the automatic mode, the selected alternative source sentence(s) may be incorporated into the source text without review. In the interactive mode, the selection component automatically selects alternative source sentences to be presented as candidates for user selection. The automatic selection is based on the computed translation confidences. Where there are several alternative source sentences generated by the tool 10, the selection component may filter them to remove those that do not have a translation confidence which is at least higher than for the original source sentence and may rank the remaining ones, e.g., based on their computed translation confidences, for presentation in a ranked order. As will be appreciated, the selection component 78 may be a part of the rewriting tool.

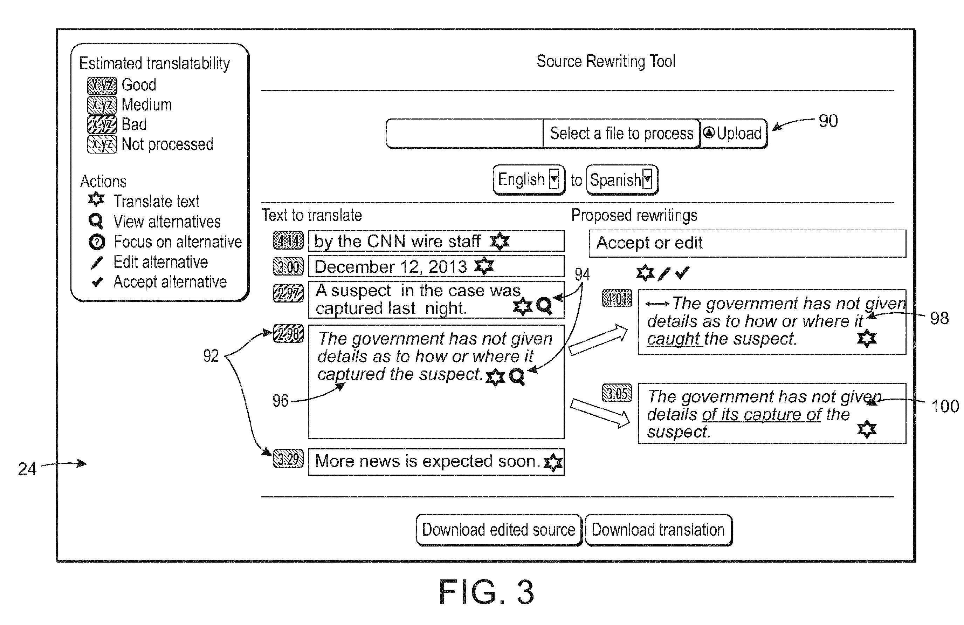

A GUI generator 80 generates a GUI 26 for display on the user interface, based on the output of the source rewriting tool 10 and selection component. An exemplary GUI 26 is shown in FIGURE 3, and described in further detail below.

The memory 34 may represent any type of non-transitory computer readable medium such as random access memory (RAM), read only memory (ROM), magnetic disk or tape, optical disk, flash memory, or holographic memory. In one embodiment, the memory 34 comprises a combination of random access memory and read only memory. In some embodiments, the processor 38 and memory 34 may be combined in a single chip. The network interface 40 and/or 42 allows the computer to communicate with other devices via a computer network, such as a local area network (LAN) or wide area network (WAN), or the Internet, and may comprise a modulator/demodulator (MODEM) a router, a cable, and and/or Ethernet port.

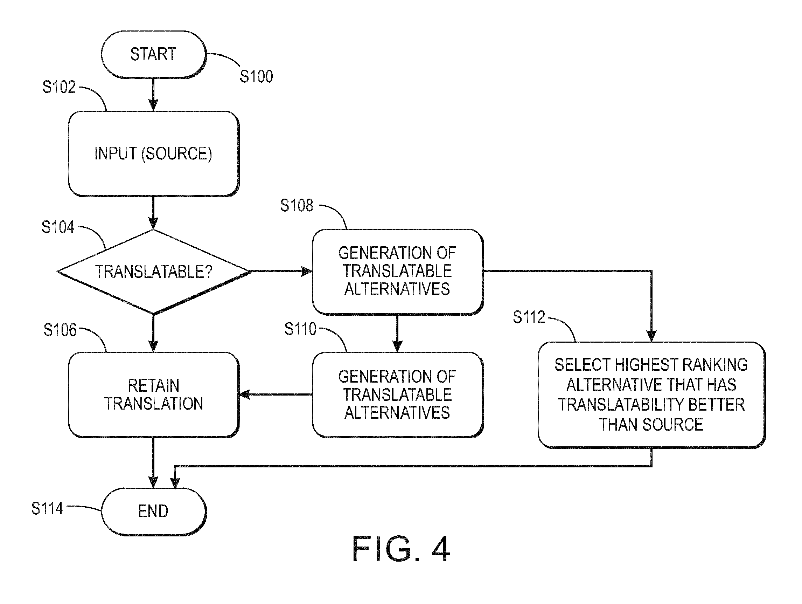

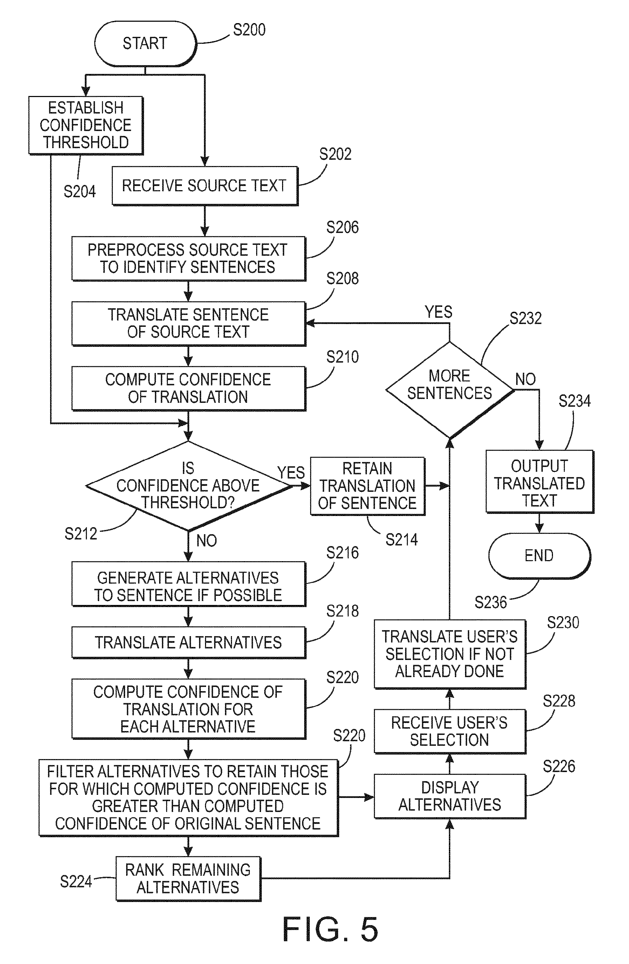

The digital processor 38 can be variously embodied, such as by a single-core processor, a dual-core processor (or more generally by a multiple-core processor), a digital processor and cooperating math coprocessor, a digital controller, or the like. The digital processor 38, in addition to controlling the operation of the computer 32, executes instructions stored in memory 34 for performing the method outlined in FIGURE 4 and/or 5.

The term "software," as used herein, is intended to encompass any collection or set of instructions executable by a computer or other digital system so as to configure the computer or other digital system to perform the task that is the intent of the software. The term "software" as used herein is intended to encompass such instructions stored in storage medium such as RAM, a hard disk, optical disk, or so forth, and is also intended to encompass so-called "firmware" that is software stored on a ROM or so forth. Such software may be organized in various ways, and may include software components organized as libraries, Internet-based programs stored on a remote server or so forth, source code, interpretive code, object code, directly executable code, and so forth. It is contemplated that the software may invoke system-level code or calls to other software residing on a server or other location to perform certain functions.

As will be appreciated, FIGURE 2 is a high level functional block diagram of only a portion of the components which are incorporated into a computer system 30. Since the configuration and operation of programmable computers are well known, they will not be described further.

FIGURE 4 provides an overview of the source rewriting method.

The method begins at S100.

At S102, source text 14 is received, such as a document to be translated from a source language to a selected single target language or to a plurality of target languages.

At S104, if the source text is determined to be translatable (based on a computed translation confidence for the source text) its translation is retained at S106, otherwise, the method proceeds to S108, where translatable alternatives to the input source sentence are generated (i.e., which have a computed translation confidence measure greater than that of the source text).

In an interactive mode, these are ranked and displayed at S110.

In an automated mode, the highest ranking translatable alternative is selected at S112. The method ends at S114.

FIGURE 5 illustrates an exemplary method for source rewriting in an interactive mode in greater detail for a document which includes a plurality of source sentences. As will be appreciated, the method can also be adapted to the automated mode as in FIGURE 4.

The method begins at S200.

At S202, source text 14 is received, such as a document to be translated from a source language to a selected target language(s).

At S204, a confidence threshold $\gamma$ may be established. The confidence threshold may be set by a user, set by default, or the like. Different confidence thresholds may be established for different languages, domains (e.g., topics), or the like. In general, the threshold is set such that there is a finite probability (0<probability<1) that at least one of the source strings will not meet the translation confidence threshold and there is a finite probability (0<probability<1) that at least one of the source strings will meet the translation confidence threshold, when averaged over a set of training documents.

At S206, the source text is preprocessed by the preprocessor 60 to identify source text strings, such as sentences.

At S208 a (first) sentence s is translated. Specifically, the translation requester 62 requests the machine translation system 12 to translate the sentence into the selected target language and the machine translation system 12 outputs the translated target sentence $t$ to the confidence estimator 66.

At S210 the confidence c(s) of translating the sentence s is computed by the confidence estimator 66. The translation confidence for each sentence in the text, or a graphical representation thereof, may be displayed to the user, e.g., via the GUI.

If at S212, the computed translation confidence c(s) is at or above the threshold $\gamma$, the method may proceed to S214 where the target sentence t corresponding to s is retained.

If at S212, the computed translation confidence c(s) is below the threshold $\gamma$, the method proceeds to S216, where at least one, or more generally a plurality of alternatives $s_i$ to the source sentence s is/are generated (where possible) by the rewriting component 68, such as sentences S2A, S2B, S2C in FIG. 1. As will be appreciated, in some cases, the rewriting component 68 may be unable to generate any alternatives $s_i$, in which case the sentence s and its translation are retained and the method proceeds to S232 for processing of the next sentence.

At S218, the alternatives $s_i$ are each translated. Specifically, the translation requester 62 requests the machine translation system 12 to translate each alternative sentence into the selected target language and the machine translation system 12 outputs the respective translated target sentence $t_i$ to the confidence estimator 66.

At S220, for each alternative source string $s_i$, the translation confidence $c(s_i)$ of translating the sentence $s_i$ is computed by the confidence estimator 66, e.g., based on $s_i$ and $t_i$.

At S222, the alternatives $s_i$ are filtered to retain only those for which the computed confidence $c(s_i)$ is greater than the confidence $c(s)$ for the original sentence s (or to remove at least those for which the computed confidence $c(s_i)$ is not greater than the confidence $c(s)$). If there are no alternatives remaining after the filtering, the original sentence s is retained and the method proceeds to S214, otherwise to S224.

At S224, the remaining alternative source strings $s_i$, if more than one remains after the filtering, may be ranked. The ranking may be based on the respective computed translation confidence measures $c(s_i)$ and/or other ranking measures, such as a semantic distance from the source sentence.

At S226, provision is made for selecting (automatically or manually) at least one of the optionally ranked alternative strings $s_i$ based on the computed confidence. For example, one or more alternative strings may be displayed to the user on the GUI 24 by the GUI generator 80 as candidate(s) for replacing the original string s. The displaying of the alternative source string(s) may be performed automatically for all original source sentences that are determined to be below the threshold confidence and where there is an alternative string with a confidence which exceeds that of the source string. Alternatively, the alternatives may be displayed only when a user selects a sentence that is indicated as having a low translation confidence. Provision is made for the user to select and/or edit one of the alternative source strings or to retain and/or edit the original sentence, via the GUI. Appropriate instructions for assisting the user in performing this operation and assessing the confidence in translation are displayed. For example, a translation confidence measure associated with each source sentence and each alternative source sentence is displayed.

At S228, the user's selection (optionally edited by the user) of the original source string or one of the candidate alternatives for replacement is received by the selection component 78 of the tool.

At S230, if a translation of the user's selected sentence has not yet been generated, for example, when the user has edited the original sentence or alternative sentence, the user's selection received at S228 is translated.

At S232, if there are more sentences to be processed, the method returns to S208, otherwise the method proceeds to S234, where the aggregated translated sentences in the target language are output as target text. The method ends at S236.

In another embodiment, no confidence threshold $\gamma$ is set at S204 (or is set so high that there is a high probability that no sentence meets it). In this embodiment, for all sentences, the method may proceed from S210 to S216, e.g., without comparing the computed translation confidence to a threshold.

As will be appreciated, the steps of the method need not all proceed in the order illustrated. For example, all sentences may be processed before the user is shown the computed translation confidence measures and/or asked to select from alternative sentences.

Algorithm 1 provides pseudocode for the exemplary rewriting method when used in an interactive mode, in accordance with one specific embodiment.

---

Algorithm 1: Rewriting workflow

Data: A document to translate

Result: A translated document

Initialization: set confidence threshold $\gamma$

for *sentence s in the document* do

Assess the confidence of translating $s$, $c(s)$

if c(s) ≥ $\gamma$ then

Retain translation of $s$

else

Generate alternatives to $s$: $\{s_1; s_2; : : : s_n\}$ and translate

Filter alternatives to keep only those for which $c(s_j) > c(s))$

Rank and display alternatives

Retain translation of user's selection $s_i$

end

end

---

In another embodiment, when the automatic mode is employed, the source sentence is reformulated without any human interaction except for optionally setting a global confidence threshold $\gamma$. The exemplary rewriting tool 10 is designed to generate reformulations that do not alter the source radically, and to pick a reformulation whose confidence is above the global threshold. However, the human supervision provided by the interactive mode is beneficial in many instances.

The method illustrated in FIGURE 4 and/or 5 may be implemented in a computer program product that may be executed on a computer. The computer program product may comprise a non-transitory computer-readable recording medium on which a control program is recorded (stored), such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other tangible medium from which a computer can read and use.

Alternatively, the method may be implemented in transitory media, such as a transmittable carrier wave in which the control program is embodied as a data signal using transmission media, such as acoustic or light waves, such as those generated during radio wave and infrared data communications, and the like.

The exemplary method may be implemented on one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, Graphical card CPU (GPU), or PAL, or the like. In general, any device, capable of implementing a finite state machine that is in turn capable of implementing the flowchart shown in FIGURE 4 and/or 5, can be used to implement the rewriting method. As will be appreciated, while the steps of the method may all be computer implemented, in some embodiments one or more of the steps may be at least partially performed manually.

Translation Confidence Estimation (S104, S210)

Machine translation systems are typically evaluated based on the comparison of the output sentences to reference translations, such as those produced by a human translator who is fluent in the source and target languages. For the present application, reference translations are generally not available. In an exemplary embodiment, confidence is a measure of the ability of the translation component to produce a high quality translation of a given source string. The estimation of confidence is performed by estimation of the quality of an automated translation without relying on reference translations. In the exemplary embodiment, the confidence estimation relies on features extracted from one or more of the source string, the translation, and the translation process itself. Examples of such features are described in Blatz, et al., "Confidence estimation for machine translation," Proc. 20th Intern'l Conf. on Computational Linguistics (COLING) ACL (2004); Specia, et al., "Estimating the sentence-level quality of machine translation systems," Proc. EAMT, pp. 28-35 (2009) ("Specia, et al."). Such methods have been used, for example, for filtering out sentences that are suspected to be poorly translated in order to have them reviewed by a professional translator, but can be adapted to the present method.

In particular, the confidence estimator 66 extracts features from a source sentence/translated sentence pair and uses a learned confidence estimation function to compute a translation confidence for the source sentence based on the extracted features. Example features which can be used in a function for computing the translation confidence of an original source sentence (and also an alternative source sentence) can be selected from the following (some of which are based on the features of Specia, et al.):

Source sentence based features:

1. Number of tokens (e.g., words, ignoring punctuation, or both words and punctuation) in the source sentence.
2. Average length of a source token (e.g., average word length), in number of characters.
3. Language Model (LM) probability (or log probability) of the source sentence. This model measures the fluency of the source string and is derived from source language documents. In particular, for each word (or n-gram, where *n* is two or more) in the sentence, the probability of seeing the word in combination with the subsequent word in the source documents is retrieved from a data structure. The retrieved probabilities are multiplied together and the result normalized to account for the number of words (or n-grams) in the sentence.
4. Average number of translations per source word in the sentence. This may be computed by identifying, for each source word, the number of different target words that are seen in a parallel corpus as translations for the source word with at least a threshold probability. As an example, the IBM 1 table may be thresholded so that $\text{prob}(t|s) > 0.2$ and the thresholded table used to identify different translations. An average of the per-word number of translations is then computed for the sentence as a whole.
5. Average number of translations per source word in the sentence weighted by the inverse frequency of each word in the source corpus. The average number of translations may be computed as for feature 4, where the threshold can be the same or different. As an example, translations may be as given by IBM 1 table thresholded so that $\text{prob}(t|s) > 0.01$. The inverse frequency of the source word (number of words in a source corpus divided by the number of occurrences of the source word in the source corpus) is then multiplied by the number of different translations identified in the thresholded table.
6. Percentage of unigrams (single words) in the source sentence that are lower frequency words in a corpus of the source language, e.g., words appearing in the corpus used for training the SMT model which are in the 1st quartile of frequency.
7. Percentage of unigrams in the source sentence that are higher frequency words in a corpus of the source language, e.g., those words that are in the SMT training corpus in the 4th quartile of frequency.
8. Percentage of low frequency bigrams in the source sentence, e.g., source word pairs in the 1st quartile of frequency in a corpus of the source language, analogous to feature 6.
9. Percentage of high frequency bigrams in the source sentence, e.g., source word pairs in the 4th quartile of frequency in a corpus of the source language, analogous to feature 7.
10. Percentage of low frequency trigrams (or other n-grams, where n>3) in the source sentence, e.g., source word triplets in the 1st quartile of frequency in a corpus of the source language, analogous to feature 6.
11. Percentage of high frequency trigrams (or other n-grams, where n>3) in the source sentence, e.g., source word triplets in the 4th quartile of frequency in a corpus of the source language, analogous to feature 7.
12. Percentage of unigrams in the source sentence seen in a corpus (e.g., the SMT training corpus).
13. Number of punctuation marks in the source sentence.

Target sentence based features:

14. Number of tokens (e.g., words, ignoring punctuation, or both words and punctuation) in a target sentence produced by translating the source sentence with the machine translation model 28. This feature generally favors source sentences which have translations which are shorter over those which have translations which are longer.
15. Language Model probability (or log probability) of the target sentence. This model measures the fluency of the target string and thus is derived from target language documents and computed in a similar manner to the LM probability for the source sentence.
16. Number of occurrences of each target word within the target sentence (averaged for all words in the sentence-type/token ratio).
17. Number of punctuation marks in the target sentence. This feature generally disfavors source sentences that have translations which include a large number of punctuation marks.
18. SMT model score. For each translation, the system outputs a score, which is typically used to rank translations but can be used herein as a target sentence feature.

As will be appreciated, some of the features used may tend to favor sentences and words which, in general make translation easier, such as shorter source words, shorter source/target sentences, and source words that are used more frequently. Other features which may be favored include fewer punctuation marks, fewer out of vocabulary words, and source words with fewer probable translations. However the importance placed on each of these features is learned and incorporated as weights of the respective features in the confidence function and thus need not be as expected.

In one exemplary embodiment, at least one source-sentence based feature and at least one target sentence based feature is incorporated in the confidence function. The confidence function aggregates the different features to output an overall translation confidence measure. For example, the confidence function can include a weight for each of the different features selected. The weights can be learned using a training set of source sentences, their machine translations, and labels indicating a human reviewer's evaluation of the quality of the machine translation. For example, a set of participants (e.g., two or more, such as three participants) may be asked to estimate the quality of an automated translation of each of a set of given source strings, for example, by giving each translation a score selected from a set or range of possible scores. The quality estimations may relate to the participant's assessment of the readiness of the translation for post-editing. As an example, scores ranging from 1 to 5 may be assigned, where 1 corresponds to "The MT output is incomprehensible, with little or no information transferred accurately. It cannot be edited, and needs to be translated from scratch", and 5 to "The MT output is perfectly clear and intelligible. It is not necessarily a perfect translation, but requires little to no editing". Such evaluations were used in a task posed by the 2012 workshop on statistical machine translation. The data provided for the task included a training set of approximately 1800 source sentences in English, their translations to Spanish by the Moses translation system (see Koehn, P., et al., "Moses: Open source toolkit for statistical machine translation," in Proc. 45th Annual Meeting of the Association for Computational Linguistics Companion Volume Proceedings of the Demo and Poster Sessions, pages 177-180 (2007)). Scores were given to the translation by each of the three judges. The organizers also provided a baseline system for extracting quality-estimation features from the source and target translation, such as the length of the source and the target, the language model log probability of the sentences, and the average number of possible translations per source word in the sentence. See, Callison-Burch, et al., "Findings of the 2012 workshop on statistical machine translation," In Proceedings of the Seventh Workshop on Statistical Machine Translation, pp. 10-51, ACL (2012) for a fuller description of that task. In one embodiment, the Callison-Burch baseline system features may be used in the exemplary method (corresponding to the first 17 features listed above). However, different metrics which can be used to provide labels in such a setting are also contemplated.

In an example embodiment, the features selected include one or more features which rely on access to the translation model, and one or more features which do not. As an example, features may be extracted with the 2012 task's feature extraction baseline module, which includes (i) black-box features, which do not assume access to the translation system, such as the length of the source sentence and the target language model probabilities for the target sentence, and (ii) glass-box features, which are extracted from the translation model, such as the average number of translations per source word and the SMT model score.

The weights in the confidence function can be learned using any suitable learning algorithm, such as linear regression, support vector machines (SVM) regression, sparse logistic regression, or any other suitable machine learning method. In one example embodiment, the training data is used to train an SVM regression model using SVM$^{light}$ according to the method of Joachims, T., "Making large-scale SVM learning practical," in Schölkopf, B., Burges, C., and Smola, A., editors, Advances in Kernel Methods - Support Vector Learning, chapter 11, pp. 169-184, MIT Press, Cambridge, MA (1999). This algorithm includes a parameter (epsilon), which is the width of the tube for regression and is selected to avoid penalizing small training errors, those that are smaller than epsilon (where $\varepsilon > 0$). In one embodiment, the epsilon width of tube can be set empirically based on experiments on a portion of the training data, and can range, for example, from 0.00001-0.2. In one embodiment, an epsilon width of 0.0001 is used in the method described by Joachims.

The confidence estimation function can be of the general form:

$$F(x) = (w \cdot x) + b \qquad (1)$$

where w represents the set of weights for respective feature values x, which can be learned on the labeled training data, optionally allowing each value of x in the training data to have an error $\varepsilon$, and b is a regularizing parameter (a constant).

As will be appreciated, the method is not limited to a confidence estimation function of this form and can be learned with other learning algorithms.

Once the parameters of the confidence estimation function have been learned (such as the weights w and regularizing parameter b), the function can be applied to a new source sentence/translation pair generated in the exemplary method, to estimate the confidence in the source sentence.

In some cases the SMT system 12 may output more than one translation for each source sentence, in which case, the confidence for each of a plurality of source/translation pairs is computed.

Source rewriting (S108, S216)

The rewriting component 68 can use a variety of methods for source sentence rewriting (generating alternative source sentences), in terms of the semantic relation between the generated text and the original text.

Rewritten source text can be distinguished by the semantic relation between the resulting text and the original one. When compared with the original text, the rewritten text may include fewer (or more) words, different words, rearranged words, modifications to the punctuation, combinations thereof, or the like. In some rewriting methods, the source text is paraphrased to generate the alternative sentence, i.e., have its meaning expressed in a different way. In some rewriting methods the source text can be generalized or simplified by having some of its details omitted. Rewriting methods can also use a combination of these approaches.

Paraphrasing is often a good rewriting method, as this operation preserves the exact meaning of the source sentence, while other types of modifications do not. However, in some cases, especially for assimilation purposes, it is advantageous to have a more accurate translation with fewer details than a poor translation of the exact meaning of the original source text. This has been shown empirically, with human evaluators in Mirkin, et al., "Source-language entailment modeling for translating unknown terms," in Proc. Joint Conf. 47th Annual Meeting of the ACL and the 4th Intern'l Joint Conf. on Natural Language Processing of the AFNLP, pages 791-799, ACL (2009) (hereinafter, "Mirkin 2009"); and Aziz, et al., "Learning an expert from human annotations in statistical machine translation: the case of out-of-vocabulary words," in Proc. 14th Annual Meeting of the European Association for Machine Translation (EAMT) 2010. Additionally, in the case of unknown words in the source text, allowing generation of an entailed version of the source text, rather than an exact paraphrase of it can be advantageous.

Exemplary rewriting methods useful herein for rewriting source text include rewriting methods based on text simplification and textual entailment techniques.

1. Text Simplification

Automatic text simplification is motivated by the desire to provide easy-to-read texts. Text simplification methods have been used for preparing text for those learning to read or who are learning a new language. Similar simplification operations are useful herein. These may include the replacement of words by simpler ones, removal of complicated syntactic structures, shortening of sentences, and the removal of details that are not necessary for understanding the core idea of the text. As will be appreciated, simplification does not always result in a loss of information and may preserve the exact meaning, but expressed more simply. Simplification techniques are described, for example, in Feng, L., "Text Simplification: A survey," Technical report, CUNY (2008).

As an example, the definition of the term "volcano" by Wikipedia is found in a regular (complex) and simplified format. The first sentence reads as follows:

a. (complex) *A volcano is an opening, or rupture, in a planet's surface or crust, which allows hot magma, volcanic ash and gases to escape from below the surface.*

b. *(simplified) A volcano is a mountain where lava (hot, liquid rock) comes from a magma chamber under the ground.* Translations of these definitions into Spanish with a translation component using Moses trained with a Europarl-based translation model (see, http://www.statmt.org/moses/RELEASE-1.0/model/) are as follows:

a. *un volcan es una apertura , o ruptura , en un planeta's superficie o crust , que permite magma caliente , las cenizas volcanicas y gases de escape de por debajo de la superficie .*

b. *un volcan es una montana donde lava , liquidos (caliente roca) viene de un magma* camara *bajo el terreno .*

It is clear to a person fluent in both languages that the second sentence is better translated, and would be sufficient for many purposes. The level of simplification can be adjusted depending on the task. For tasks that require preservation of details, more conservative rewriting approaches are desirable.

In the present system, rules for simplification are incorporated which allow simplified sentences to be generated automatically. Two exemplary rewriting methods useful herein are based on text simplification techniques. These are referred to as sentence-level (or Machine Translation-based) text simplification and lexical (or synonym) simplification, which can also be SMT-based.

A. Sentence level (MT-based) text simplification

In this sentence-level rewriting method, text simplification is modeled as a Machine Translation task. However, the machine translation is not used to translate sentences from one language to another, but to translate sentences to their simplified version in the same language. This technique can be performed using Statistical Machine Translation, for example, according to the method of Specia, (see, Specia, L., "Translating from complex to simplified sentences," Intern'l Conf. on Computational Processing of the Portuguese Language (PROPOR), Lecture Notes in Artificial Intelligence, Vol. 6001, Springer, pp. 30-39 (2010), hereinafter, "Specia 2010").

In the exemplary method, an SMT simplification model 74 is learnt from a parallel corpus of texts and their simplified versions in the same language. For example, the SMT simplification model 74 may be trained for simplification from source language to simplified source language (e.g., English to simplified English) using a corpus of parallel source sentences obtained for example, from an online resource or other database, such as Wikipedia. Each pair of parallel source sentences includes a "complex" source sentence and a "simplified" version of it, typically generated by an experienced person. As an example, such a parallel corpus known as the PWKP parallel corpus has been generated by Zhu, et al. (see, Zhu, et al., "A monolingual tree-based translation model for sentence simplification," in Proc. 23rd Intern'l Conf. on Computational Linguistics (Coling 2010), pp. 1353-1361 (2010). In the exemplary method, such a parallel corpus may be filtered to select only complex source (e.g., English) sentences which are aligned to a single simple source (English) sentence. The training method entails extracting (source, simplified source) phrase pairs from the corpus. Each phrase pair thus includes a mapping from a complex phrase to its simplified equivalent. A few of such pairs are shown by way of example:

a. *traditional etymology→the name*

b. *due to its location on→because it was on*

c. *primarily dry and secondarily cold→both cold and dry*

d. *formed in significant shapes and used to→used to*

e. *the high mountainous alps→the alps*

The identified (source, simplified source) phrase pairs are stored in memory as a phrase table with associated statistics computed on the corpus, analogous to biphrase table 64.

The learning of the SMT model 74 for the SMT system can be analogous to the learning of the SMT model 28, in that it identifies weights for respective features of a log-linear scoring function, or other scoring function. The scoring function scores candidate simplified sentences that have been generated from input complex source sentences using (source, simplified source) phrase pairs retrieved from the phrase table. The scoring is based on features extracted from the complex source sentence and/or simplified (target) sentence and the learned feature weights. The scoring function may include a feature weight for a language model. In this case, the language model used in MT-based rewriting may be a simplified source language model, e.g., trained only with the simple English sentences from the (complex, simple sentence) parallel corpus, or from a monolingual corpus of simplified sentences, to encourage the generation of simpler sentences. In particular, for each word (or *n*-gram, where *n* is two or more) of the simplified source sentence, the probability of seeing the word in combination with the subsequent word in the simplified source documents is retrieved from a data structure. The retrieved probabilities are multiplied together and the result normalized to account for the number of words (or n-grams) in the simplified source sentence. The language model thus computes fluency of the simplified source sentence.

B. Lexical simplification

Another operation which can be performed for text-simplification involves lexical substitutions. Rather than training a machine translation system to translate from complex source text to simplified source text, this approach addresses lexical simplification directly. For example, relevant synonyms may be extracted from the phrase table of a trained SMT model for simplification of complex source (e.g., complex English) to simplified source (e.g., English). The phrase table for the simplification model 74 described above may be used for this purpose. The extracted synonyms are used as substitutions to simplify new sentences under the assumption that they will yield higher confidence translations. In one embodiment, all single token mappings are extracted from the phrase table of the trained simplification model 74, removing mappings of punctuations, numbers and stop-words. The remaining source-target word pairs are lemmatized and checked to confirm that they are recognized synonyms in a suitable resource, such as WordNet. See, Fellbaum, C., editor, WordNet: An Electronic Lexical Database (Language, Speech, and Communication), The MIT Press (1998), for a discussion of WordNet. Such a resource can also be used to identify part-of-speech tags for the words, if this information is not available in the phrase table of the SMT simplification model 74. Those word pairs that are recognized synonyms are labeled as a valid substitution pair and stored as complex-simple word pairs in a synonym lexicon 76 in memory 34, otherwise they are discarded. Other complex-simple word pairs may be obtained from previously-generated resources, such as WordNet (see also, Table 2 in Specia 2010).

For example, at S216, when a match of a complex source word is found in a source sentence it is replaced with its simpler synonym, after being properly inflected to match the inflection of the original word (e.g., by changing gender, case, number, etc. to match that of the complex word for which the simpler synonym is being substituted).

An example of rewriting using this approach for the source string in below:

a. *why the Galileo research program replaced rival programs*
b. *why the Galileo research program replaced competitor programs*

As will be appreciated, a large number of rewritten sentences may be generated from a single source sentence by the lexical (synonym) method. This is equivalent to $\Pi_w |syn(w)| - 1$, where w is a word in the sentence for which synonyms in list 76 is/are found and $|syn(w)|$ is the number of synonyms for w on the list, including w itself. The -1 is because the source is included in this combinatorial set. This may cause a problem when there are too many options, and thus the exemplary method may use filtering methods to reduce the number of rewritten sentences (e.g., by choosing only the most frequent synonym pairs or by selecting cases where a word has more than one synonym), or incrementally computing them as needed.

As an example, given the source string:

*why the Galileo research program superseded rival programs.*

The system may find matches in the list 76 for superseded (replaced) and rival (competitor). Each has one synonym, providing three options for rewritten strings:

a. *why the Galileo research program replaced rival programs.*
b. *why the Galileo research program superseded competitor programs.*
c. *why the Galileo research program replaced competitor programs.*

The system may consider all of these, or find the one with the highest translation confidence to be presented to the user.

2. Entailment-based rewriting

Textual Entailment (TE) is a framework for textual inference which has been applied to a variety of natural language processing (NLP) applications, by reducing the inference needs of these applications to a common task: can the meaning of one text (denoted *H*) be inferred from another (denoted *T*). When such a relation holds, then it is stated that *T textually entails H.* (See, Dagan, et al., "Recognizing textual entailment: Rationale, evaluation and approaches," Natural Language Engineering, 15(4):1-17 (2009)) Paraphrases, therefore, are a special case of the entailment relation, where the two texts both entail each other. The notions of simplification and of generalization can also be captured within TE, where the meaning of the simplified or the generalized text is entailed by the meaning of the original text (see, Mirkin, S., PhD thesis, "Context and Discourse in Textual Entailment Inference," Bar-Ilan University (2011). In the present case, TE can be used to provide both paraphrases (which preserve the meaning) and simplification or generalization operations (which preserve the core meaning, but may lose some information) with entailment-based methods.

The exemplary entailment component 72 can be based on any conventional textual entailment system used for entailment recognition. The goal is somewhat different, however. In textual entailment the system considers two source strings, i.e., given *T and H* the system assesses whether *T* entails H. For recognition of entailment, a large set of entailment rules is employed, including lexical rules that correspond to synonymy (e.g. *'buy↔acquire'*) and hypernymy (is-a relations like *'poodle→dog'*)*,* lexical syntactic rules that capture relations between pairs of predicate-argument tuples, and syntactic rules that operate on syntactic constructs.

The present application involves entailment generation rather than entailment recognition. An existing TE system can be adapted for this purpose which applies the entailment rules of the TE system to generate entailed texts from source sentences. Thus, in the present method, where there is only *T*, not *H*, the rules used to recognize entailment in a conventional system are employed instead to generate entailed (rewritten) source sentences *H*. The textual entailment rewriting includes applying at least one of a set of entailment-type rewriting rules that are configured for generating an alternative source string which is entailed by the source text string.

An example of an existing TE system from which such rules may be generated is the open source Bar-Ilan University Textual Entailment Engine (BIUTEE), described in Stern and Dagan, "BIUTEE: A modular open-source system for recognizing textual entailment," Proc. ACL 2012 System Demonstrations, pp. 73-78, ACL 2012 (available at www.cs.biu.ac.il/˜nlp/downloads/biutee). Not all entailment rules of the existing entailment system may be applicable to the present application. Suitable TE rules may be selected to satisfy some or all of the following three conditions:

(i) the rules maintain fluency;
(ii) they are rather conservative, i.e.. do not omit too much information from the text; and
(iii) they conform to the kind of operations useful herein, such as simplification, and not to common-sense inference (e.g., inferences like *'The mother was breastfeeding in the park→The mother was in the park with her baby'* are generally avoided). The rules of a conventional TE system may thus be manually filtered to identify those that are most appropriate. Automatic or semi-automatic selection of entailment rules that comply with these criteria is also contemplated. The TE generating rules may also be devised manually. The TE rules may operate on dependency parse-trees (see, for example those devised manually by Lotan (see, Lotan, A., Master's thesis, "A syntax-based rule-base for textual entailment and a semantic truth value annotator," Tel Aviv University 2012).

An example of the TE-based rewriting that may be integrated in the exemplary rewriting tool is as follows, where (b) shows a rewritten sentence converted from the more complex one (a):

(a) *Silently and without a word, he left the room*
(b) *Without a word, he left the room*

With this rule, an adverb is removed.
Other examples for potential textual entailment rules are as follows:

a. Converting passive to active voice, or *vice versa,* for example *X bought Y* is replaced with *Y was bought by X* (or *vice versa).*
b. Swapping places between a pair of conjuncts, for example: *Louise and Thelma* is replaced by *Thelma and Louise*
c. Insertion or deletion of relative pronouns (e.g., removal/addition of which/that/whom and the respective form of be). For example:

*The car which was driven past the exit crashed* is replaced with *The car driven past the exit crashed*

d. Apposition to copula. These are phrases set off by pauses (e.g., commas) that are often regarded as explanatory, which can be inverted or in some cases, removed or split, e.g.:

*the boy, his son, arrived early* is replaced by
*the boy arrived early* or
*the boy is his son. the boy arrived early*

Other rules employed by the rewriting tool may handle apposition or clause removal, splitting into sentences, or passive to active transformations.
The textual entailment rules need not aim to keep the same meaning, as in paraphrasing, but may generalize the source.
Other rewriting rules may be used to perform lexical or phrase substitution, reordering, lexical-syntactic modifications (the changes affect both words and syntactic structure), syntactic changes (e.g., passive-to-active), and the like. Such rules may be learned automatically, but there are also many available resources from which to obtain them, such as WordNet.
Since some rules are more effective than others, they may be tested before incorporation. New rules may also be created automatically from existing ones. For example, assume that the template rewriting rule is of the form: *X buy Y ↔ X own Y,* where *buy* represents any verb form of *to buy* and *X* and *Y* are named entities (or even common nouns). A search is made of a corpus (such as the web) for occurrences of part of the template, such as *X buy Y,* which may retrieve, for example, *Xerox bought ACS, Nuance buys Swype.* The instantiations of the variables can be used to create a new search template: *Xerox Z ACS.* The corpus is then searched with the new template to get: *Xerox acquired ACS.* This can be used to generate a rule which generates a paraphrase (rewriting rule) *X buy Y ⇔ X acquire Y.*

Another method which can be employed for rewriting involves machine translation (e.g., SMT) from the source language to a pivot language and then back from the pivot language to the source language. The pivot language can be any language different from the source language, and can also be different from the one into to which the SMT system 12 translates the source text.

As will be appreciated, there is some overlap between the methods discussed above. For example, simplification may use techniques that fall under both paraphrasing and textual entailment, e.g., word substitution and paraphrasing is a type of textual entailment where the relation is bidirectional.

The rewriting tool interface

The rewriting tool 10 can be implemented as a web application. A snapshot of an exemplary interface 24 is shown in FIGURE 3. With this interface, the user can upload a document 14 that he wants to translate by using a document selector 90. The selected source text 14 is displayed as a set of source sentences. Each source sentence (or at least some of them) is associated with an indicator 92 of the computed translation confidence of that sentence. In one embodiment, these indicators are displayed next to the sentence and are color coded to denote an estimate of translation confidence. For example color codes can include green to denote the highest confidence, orange to denote medium confidence, and red the lowest. The sentences whose confidence value is coded as green typically require no rewriting in order to produce a good translation, while the ones marked in red are estimated to be translated with poor quality, and thus are predicted to require most attention from the user. The actual translation confidence score may also be presented (numbers shown within the exemplary indicators 92 are exemplary only and are not intended to reflect the actual values output by the system). Text strings which the system is unable to translate may be color coded with a different color.

In the exemplary embodiment, the user is only able to review alternatives which have a higher confidence score than the original sentence. Those sentences for which the system 30 has identified one or more rewritten sentences with higher translation confidence, have a "view suggestions" icon 94 (e.g., a magnifying glass) displayed next to them. Clicking on or otherwise actuating one of these icons causes the interface 24 to display one or more of the corresponding rewritten sentences that have the highest translation confidence. For example, the user has clicked on the icon 94 for the fourth sentence 96, which causes the two most confident alternatives 98 and 100 for this sentence to be displayed in a separate area of the screen. These alternative rewriting suggestions have associated translation confidence indicators 92 that are color-coded in the same way as for the original source sentence. The alternative 98 with the highest confidence score may be displayed at the top of the list of alternatives. The original sentence 96 may also be displayed in this list, to permit it to be edited, and to make it easier to view differences. The user has two options: he can select one of the suggested alternatives 98, 100 or he can choose to edit either the source sentence 96 or one of the alternatives 98, 100.

In the case of the first alternative, the suggestion is simply to replace the word *captured* with the word *caught,* a rewriting that is estimated to improve the translation of the sentence. The interface indicates the changes that have been made, for example by highlighting, changing color, or otherwise accentuating the modifications that have been made. The user may click on one of the sentences to edit. The alternative sentence chosen for editing, e.g., by clicking on it or an associated editing icon (the bidirectional arrow), may be highlighted or shown in a different color with the modifications indicated. The user may confirm (e.g., with the check mark icon) one of the sentences displayed. After user confirmation, the display of the document is updated based on the user selection, including the updated confidence estimation. At any time, the user can click on a translate icon (a star) to request that the translation of the source sentence or the alternative sentence be displayed. For example, the user may select alternative 100, which is predicted to improve translation, but may not be the one with the highest confidence. When done, the user can save the edited text and/or its translation. As will be appreciated, the design of the interface 24 is not limited to that shown in FIGURE 3.

The exemplary interface 24 is designed for providing a quick response time to enable interactive work. In one embodiment, alternatives and confidence scores for sentences are computed once, when the document is loaded. This can be in parallel, thus ensuring a quick load time. After the initial loading, the alternatives and their confidence scores for any sentence in the document can then be fetched immediately, when needed. Thereafter, only if the user manually edits a sentence is the confidence assessed for this sentence translation on the fly. The edits and selections are saved automatically after every user action. Accordingly, if at a later time, the user wants to resume his work, the previous state of the work can be accessed without any delay.

The exemplary interface 24 is shown for use in an interactive mode where the user receives a list of source alternatives that have a higher translation confidence than the original source. He picks one among them to replace the original or edits either the original or the alternative. The tool can also be used in an automatic mode in which the system iteratively rewrites each low-confidence input sentence and translates it until a translation of reasonably high confidence is achieved. For example, at each iteration, the source is reformulated by adding more lossy operations that transform the source sentence even further, thus diluting the meaning to some extent. Examples of such operations include the removal of modifiers or the removal of clausal units from the sentence.

The exemplary rewriting suggestions are dependent, at least in part, on the SMT model 28 employed. A separate rewriting tool 10, or appropriate parts thereof, can thus be provided for each language into which source text in one language is to be translated. The process of preparing a source for translation may thus be repeated for every target language separately. While this is not an issue if the automatic mode is used, it may be time consuming for use in the interactive model. In one embodiment, given a source language and multiple target languages, a single tool 10 may compute translation confidence for each of the set of required language pairs, and select alternative source sentences that satisfy all of them, i.e., which provide a higher translation confidence for all the target languages than the original source sentence. While this may not provide an optimal solution in comparison to rewriting for a specific SMT model 28, it can provide a practical solution which reduces the rewriting time, as the user need only review the source text once.

Some rewriting rules may be context sensitive since different senses for the same word are applicable in different contexts. Context-matching suitable for this kind of case is addressed in Mirkin 2009 and Mirkin et al., "Classification-based contextual preferences," Proc. TextInfer 2011 Workshop on Textual Entailment, pages 20-29, ACL 2011.

Ranking of alternatives may be based solely on translation confidence. However, other factors may be considered in the ranking, such as the degree of semantic deviation from the source. Deviation may be computed as the edit distance between the source and rewritten strings or based on the rules used (e.g., less conservative rules being given a lower weighting so that tend to be lower ranked). Particularly when less conservative or lossy rewriting techniques are employed, a ranking based on both these factors (translation confidence and degree of deviation from the source) may be useful.

The exemplary system and method can be used for improving automatic translation quality in general, and may facilitate further automation in translation services and reduce costs. As one example, the system 30 may be employed in a service organization (e.g., a call center), which allows agents that are not fluent in a target language to respond to clients in their own language. The agent may use a conventional SMT system to translate the client's message from the target language into the source language that is used by the agent, where the quality of translation need not be too high for the agent to be able to understand the client's message. The agent then uses the system 30 to prepare a response in the source language with an improved confidence of being translated well and to translate the response into the client's language with the SMT system 12. This allows the service organization to maintain an environment where the agents need not all be both domain experts and fluent in the different languages the organization needs to handle.

The system and method also find application in other business situations where post-editing costs are high, for example because of a lack of people who are both expert in the domain and competent in the target language, such as in the generation of instruction manuals in different languages, translation of scientific papers, and the like. Post-editing can then be reserved for the most difficult cases. While the exemplary system cannot fully guarantee the accuracy of all translations, it can reduce the number of sentences that need to go through post-editing, and the overall cost of this task.

Without intending to limit the scope of the exemplary embodiment, the following examples demonstrate the applicability of the method.

EXAMPLES

A prototype system 30 was used in an initial evaluation of the method in an English to Spanish translation setting, using 960 sentences from the 2008 News Commentary data. Moses Release 1.0 of an English-Spanish Europarl-trained model was used to obtain English-Spanish translations (available from http://www.statmt.org).

Two annotators who speak English but not Spanish used the exemplary rewriting tool to rewrite an English text. They reviewed the proposed rewritten sentences and were instructed to "trust the judgment" of the confidence estimator 66; that is, reviewing the suggestions from the most to the least confident one, they accepted the first rewritten sentence that was fluent and preserved the meaning of the source document as a whole. The original sentence and the selected alternative were then both translated to Spanish and presented as competitors to two native Spanish speakers. The sentences were placed within their context in the original document, taken from the Spanish side of the corpus. The order of presentation of the two competitors was random. The Spanish speaking annotators were asked to choose which of the two sentences they would prefer having in the given context, or "no clear winner" if they could not choose one over the other.

EXAMPLE 1: Source-side analysis

For this part of the evaluation, 960 English sentences were provided to the tool. The lexical simplification method offered rewritings for 70% of them, while the sentence-level simplification method proposed different rewritings for more than a half of these (that is, excluding cases where the two methods yielded the same suggestion), as well as for 116 (12%) other sentences. By construction, the sentence-level method generates at least one rewriting for every sentence (in this evaluation the single-best translation was used). Yet, since this method translates from English to English, sometimes the generated rewriting is identical to the original sentence. Hence, for 18% of the sentences, no rewriting was produced. 57% of the sentences with proposed rewritings had higher-confidence suggestions. These were approximately equally divided by the sentence-level and the lexical methods. Table 1 shows several rewritings that were suggested by the each of the two methods. The lexical method replaced a word or two in the sentence by their synonyms; the sentence-level method did that as well, but also generated other rewriting types, including multi-word synonym substitutions, and some other simple paraphrasing.

TABLE 1: Snippets from accepted rewriting by the lexical (top) and the sentence-level (bottom) methods. Boldface marks the difference between the original and rewritten text.

| ORIGINAL | REWRITING |
| --- | --- |
| Lexical rewriting | |
| or somewhere in that vicinity | or somewhere in that neighbourhood |
| have welcomed Christmas in this fashion every year | have welcomed Christmas in this way every year |
| reduced the probability of the recession | reduced the chance of the recession |
| roughly 140,000 drivers | around 140,000 drivers |
| Sentence-level rewriting | |
| exceeds the two-thirds mark (71 percent) | exceeds the two-thirds mark (71%) |
| to scrap co-payments for doctor visits | to get rid of co-payments for doctor visits |
| giant supermarkets located in the shopping triangle | giant supermarkets in the shopping triangle |
| it had discharged a patient | it had let go a patient |
| there's no mistaking the political message | there is no mistaking the political message |
| not mandatory for either women or men | not a must for either women or men |
| sugar cane from the vast plantations was transported | sugarcane from the vast plantations was sent |
| things you can annoy your colleagues with | things you can be annoying your colleagues with |

Example 1 shows example rewriting by the sentence-level method, where (a) is a segment of the original sentence and (b) is its corresponding rewriting.

> (1) a. *Looking only at the ratios of people who say they definitely will vote in the referendum, we find . . .*

> b. *Looking only at the ratios of people who say they definitely will vote, we find ...*

Whether such simplification is valid or not depends on the context. If the context makes it clear that *will vote* refers to *will vote in the referendum,* then, given that a better translation is anticipated, this is a desirable kind of rewriting. Indeed, considering the context, some of which is shown below, it can be seen that the removal of the modifier is valid here.

*When queried about interest in a referendum, 60 percent of the sample said it definitely would vote in one... Given current determination to vote, the referendum is certain to be valid... Looking only at the ratios of people who say they definitely will vote [in the referendum], we find ...*

In another case, a modifier removal by the sentence-level method resulted with an invalid rewriting, as shown in Example 2.

> (2) a. *the american federal reserve bank , the european central bank .*

b. *the american reserve bank , the european central bank . . .*

This rewriting was mistakenly accepted by an English-speaking annotator. The reason may lie in the interface presented to users highlights differences constituting additions or substitutions, but did not provide the user with an easy means to spot deletions. This can easily be addressed through modifications to the interface, for example, using strikethrough to highlight deletions.

Also, an incorrect synonym was sometimes suggested as a replacement for a word (e.g., *Christmas air* for *Christmas atmosphere).* By limiting the selector's choice only those rewritten source strings associated with at least a minimal improvement in confidence, the cases where there is no clear winner may be reduced, and the likelihood of introducing errors with the tool may be reduced, particularly in the fully automated case. In the interactive case, the user would likely be able to spot those cases where the tool produced a poor rewritten source string and then select the original string, edit the rewritten one, or select another alternative if there was one. However, requiring a threshold improvement in translation confidence may still be useful in the interactive case to reduce the workload of the user.

In general, however, the sentence-level method was observed to work well, when processed at the level of a single sentence, as standard SMT systems do. Thus, the removal of the *in a referendum modifier* was not done through consideration of the context, but based on rules learned from the training set. Having the evaluation of the user assists in determining appropriate rewritings. The user can judge whether a dropped text segment is necessary, given the context. However, particularly in the case of an automated tool, contextual information can be integrated into the tool, either by using rewriting methods that consider wider context, or by filtering out rewritings that deviate too much from the source sentence.

EXAMPLE 2: Impact on translation

440 sentences were used for translation to Spanish. Approximately a quarter of these had higher confidence suggestions that were accepted by the English-speaking annotators. 15% of them yielded identical translations to the original. Almost all of these originated from the lexical method, where two source synonyms were translated to the same target word. For example, the word *begin* in a sentence replaced by *start* resulted in similar confidence, since both were translated to the Spanish word *comenzará.* To save pre-editing effort, showing such an alternative to the user can be omitted.

The results of this evaluation show that in 20.6% of the cases, the translation of the original sentence was preferred over the rewritten one. In 30.4% of the cases, the translation of the rewritten sentence was preferred and in 49% of the cases, there was no preference. Due to the small sample size, these percentages may not be statistical significant.

Among the two methods, translations resulting from the sentence-level rewriting were often preferred by the annotators. Improvement was manifested in better readability, grammaticality or the removal of unknown words from the translation.

It is to be appreciated that the prototype tool 10 employed a limited set of rewriting rules and could be refined to achieve better results. However, even with the prototype tool, the results show that rewriting tends to improve translation quality. Further, in the evaluation, every sentence was rewritten. In the example, identical (e.g., when two source synonyms were translated to the same target word.) or near-identical translations were often generated, with only marginal differences in confidence.

The user's cognitive effort could be decreased if only those rewritings associated with a substantial improvement in confidence were displayed.

The methods used in the evaluation can be used to evaluate new rewriting techniques. For example, if newly added rewriting methods do not improve the percentage of cases where the translation of the rewritten string is preferred, they may not be useful additions to the rewriting component. Existing rules can also be evaluated by comparing the results for different sets of rules.

**Claims**

1. A method for rewriting source text, comprising:

   receiving source text comprising at least one source text string in a first natural language;
   with a processor, for each of the at least one source text string:

      translating the source text string with a machine translation system to generate a first target text string in a second natural language;

computing a first translation confidence for the source text string based on at least one feature that is based on at least one of the source text string and the first target text string;

providing for generating at least one alternative text string in the first natural language, the generating comprising automatically rewriting the source text string; and

for each of the at least one alternative text string:

translating the alternative text string with the machine translation system to generate a second target text string in the second natural language; and

computing a second translation confidence for the alternative text string based on at least one feature that is based on at least one of the alternative text string and the second target text string; and

based on the computed first and second translation confidences, providing for selecting one of the at least one alternative text strings as a replacement for the source text string in the source text.

2. The method of claim 1, further comprising providing for outputting at least one of modified source text comprising the selected alternative text string and a translation of the modified source text.

3. The method of claim 1 or claim 2, wherein the providing for selecting the alternative text string as a replacement for the source text string in the source text comprises providing for displaying the alternative text string on a graphical user interface and for receiving a user's selection of the alternative text string.

4. The method of any of the preceding claims, further comprising comparing the first translation confidence and second translation confidence and wherein the providing for selecting at least one of the at least one alternative text strings comprises providing for selection of at least one of the at least one alternative text strings for which the second translation confidence is at least higher than the first translation confidence.

5. The method of any of the preceding claims, wherein the generating at least one alternative text string comprises generating a plurality of alternative text strings and the providing for selecting one of the plurality of alternative text strings as a replacement for the source text string comprises at least one of:

filtering the plurality of alternative text strings to remove those for which the second computed translation confidence does not exceed the first computed translation confidence; and

ranking at least some of the plurality of alternative text strings based on their respective computed second translation confidences.

6. The method of any of the preceding claims, wherein the computed first translation confidence is based on at least one feature that is based on the first target string and the computed second translation confidence is based on at least one feature that is based on the second target text string and optionally, wherein the computed first translation confidence for the source text string is based on at least one feature that is based on the source text string and the computed second translation confidence for the source text string is based on at least one feature that is based on the alternative text string.

7. The method of any of the preceding claims, wherein the computed first and second translation confidences are based on at least one feature selected from the group consisting of:

a. a number of tokens in the respective one of the source text string and the alternative text string;
b. a number of tokens in the respective one of the first target text string and the second target string;
c. an average length of tokens in the respective one of the source text string and the alternative text string;
d. a Language Model probability computed for the respective one of the source text string and the alternative text string;
e. a Language Model probability computed for the respective one of the first target text string and the second target string;
f. a number of occurrences of each target word within the respective one of the first target text string and the second target string;
g. an average number of translations per source word in the respective one of the source text string and the alternative text string;
h. an average number of translations per source word in the respective one of the source text string and the alternative text string weighted by the inverse frequency of each word in a source language corpus;

i. a percentage of n-grams in the respective one of the source text string and the alternative text string that are determined to be lower frequency words in a corpus of the source language, where $n$ is a number which is at least one;

j. a percentage of n-grams in the respective one of the source text string and the alternative text string that are determined to be higher frequency words in the corpus of the source language, where $n$ is a number which is at least one;

k. a percentage of unigrams in the respective one of the source text string and the alternative text string observed in a source language corpus;

l. a number of punctuation marks in the respective one of the source text string and the alternative text string;

m. a number of punctuation marks in the respective one of the first target text string and the second target string; and

n. an SMT model score for the target string.

**8.** The method of any of the preceding claims, wherein the generating at least one alternative text string in the first natural language comprises applying at least one rewriting method selected from the group consisting of text simplification and textual entailment rewriting, and optionally wherein at least one of:

a) the text simplification method is selected from:

a sentence-level rewriting method which translates the source text string to a simplified source text string in the first natural language using a translation model which has been trained on a parallel corpus of complex source text strings and corresponding simplified source text strings in the first natural language; and lexical simplification in which a lexicon of complex source words and respective simplified source words is accessed to identify a simplified source word corresponding to a source word in the source string; and

b) the textual entailment rewriting comprises applying at least one of a set of rewriting rules that are configured for generating an alternative source string which entails the source text string or is entailed by the source text string.

**9.** The method of any of the preceding claims, further comprising providing for a user to edit at least one of the source text string and one of the at least one alternative text strings.

**10.** The method of any of the preceding claims, wherein the translating of the source text string to generate the first target text string in the second natural language comprises, for each of a plurality of second languages, translating the source text string to generate a respective first target text string in the respective second natural language and wherein the providing for selecting one of the at least one alternative text strings as a replacement for the source text string in the source text is based on a computed second translation confidence for the at least one alternative text string for each of the plurality of second languages.

**11.** The method of any of the preceding claims, wherein the method further comprises comparing the first translation confidence to a threshold confidence and retaining the source string without generating any alternative text strings when the first translation confidence meets the threshold confidence, otherwise, generating the at least one alternative text string.

**12.** A computer program product comprising a non-transitory storage medium which stores instructions, which when executed by a computer, perform the method of any of the preceding claims.

**13.** A system for rewriting source text, comprising:

a rewriting component configured for receiving source text comprising a source text string in a first natural language and generating at least one alternative text string in the first natural language by rewriting the source text string;

a translation requester configured for requesting a first machine translation of the source text string and a second machine translation of the alternative text string;

a confidence estimator for estimating a translation confidence for the source text string and alternative text string;

a selection component for selecting alternative text strings as replacements for source text strings or selecting candidates for replacement of source text strings, based on the translation confidences; and

a processor which implements at least one of the translation requester, confidence estimator, and selection component.

14. The system of claim 13, further comprising a graphical user interface generator which generates a graphical user interface for user selection and editing of source text strings and alternative text strings.

15. An interactive translation method comprising:

receiving source text comprising at least one source text string in a first natural language;
with a processor, for each of the at least one source text string:

translating the source text string with a machine translation system to generate a first target text string in a second natural language;
computing a first translation confidence for the source text string;
providing for retaining the source text string in the source text where the first translation confidence meets a confidence threshold and for the source text string in the source text and for generating at least one alternative text string in the first natural language based on the source text string where the first translation confidence does not meet the threshold; and
for each of the at least one alternative text string:

translating the alternative text string with the machine translation system to generate a second target text string in the second natural language; and
computing a second translation confidence for the alternative text string; and

providing for retaining the source text string in the source text where the first translation confidence at least meets the second translation confidence of each of the at least one alternative text strings and for presenting at least one of the at least one alternative text strings to a user as a candidate for replacement of the source string in the source text otherwise; and

outputting a translation of the source text based on the source text strings that have been retained and the presented alternative source strings that have been selected by a user for replacement of a respective source string.

```
                                              ┌─────────────────────────────────────────┐
                                              │                                         │
                                          ┌───┼──────────────────────────────────────┐  │
                              10          ▼   │                                       │  │
                  ┌──────────────────────────────────┐                               │  │
                  │        REWRITING TOOL            │      12                        │  │
  14              │  ┌────────────────────────────┐  │  ┌──────────────────┐     18   │  │
┌──────────────┐  │  │    CONFIDENCE             │  │  │  MT COMPONENT    │  ┌──────────────┐
│ SOURCE TEXT  │  │  │    MEASURES              │  │  │                  │  │ TARGET TEXT  │
│ S1           │  │  │                          │  │  │                  │  │ T1           │
│ S2           │══▷│  │  T1→C(S1), >γ           │══▷│  │ ┌──────────┐    │══▷│ T2           │
│ S3           │  │  │  T2→C(S2), <γ           │  │  │ │ MT MODEL │    │  │ T3           │
│ S4           │  │  │  T3→C(S3), <γ           │  │  │ └──────────┘    │  │ T4           │
└──────────────┘  │  │  T4→C(S4), >γ           │  │  └────────────────┬─┘  └──────────────┘
                  │  └────────────────────────────┘  │         28  ◄───┘
                20 │                                  ◄──────────────────┐
                  └──────────────┬───────────────────┘                   │
                      22         ▽                      26          24    │
             ┌───────────────────────────────┐  ┌───────────────────────────────┐
             │  REWRITTEN SOURCE TEXT        │  │ ┌───────────────────────────┐ │
             │                               │  │ │  REVISED SOURCE TEXT      │ │
             │  S1                           │  │ │                           │ │
             │  S2→S2A, S2B, S2C            │══▷│ │  S1                       │ │
             │  S3→S3A                      │  │ │  S2A→S2A1                 │ │
             │  S4                           │  │ │  S3A                      │ │
             │                               │  │ │  S4                       │ │
             └───────────────────────────────┘  │ └───────────────────────────┘ │
                                                 └───────────────────────────────┘
```

## FIG. 1

FIG. 2

FIG. 3

FIG. 4

START — S200

ESTABLISH CONFIDENCE THRESHOLD

S204

RECEIVE SOURCE TEXT — S202

PREPROCESS SOURCE TEXT TO IDENTIFY SENTENCES — S206

TRANSLATE SENTENCE OF SOURCE TEXT — S208

YES

MORE SENTENCES — S232

NO

S234

COMPUTE CONFIDENCE OF TRANSLATION — S210

IS CONFIDENCE ABOVE THRESHOLD? — S212

YES

RETAIN TRANSLATION OF SENTENCE — S214

OUTPUT TRANSLATED TEXT

END — S236

NO

GENERATE ALTERNATIVES TO SENTENCE IF POSSIBLE — S216

TRANSLATE ALTERNATIVES — S218

TRANSLATE USER'S SELECTION IF NOT ALREADY DONE — S230

COMPUTE CONFIDENCE OF TRANSLATION FOR EACH ALTERNATIVE — S220

RECEIVE USER'S SELECTION — S228

FILTER ALTERNATIVES TO RETAIN THOSE FOR WHICH COMPUTED CONFIDENCE IS GREATER THAN COMPUTED CONFIDENCE OF ORIGINAL SENTENCE — S220

DISPLAY ALTERNATIVES — S226

RANK REMAINING ALTERNATIVES — S224

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **BLATZ et al.** Confidence estimation for machine translation. *Proc. 20th Intern'l Conf. on Computational Linguistics (COLING) ACL (2004),* 2004
- **SPECIA et al.** Estimating the sentence-level quality of machine translation systems. *Proc. EAMT,* 28-35
- **KOEHN, P. et al.** Moses: Open source toolkit for statistical machine translation. *Proc. 45th Annual Meeting of the Association for Computational Linguistics Companion Volume Proceedings of the Demo and Poster Sessions,* 2007, 177-180
- **CALLISON-BURCH et al.** Findings of the 2012 workshop on statistical machine translation. *Proceedings of the Seventh Workshop on Statistical Machine Translation,* 2012, 10-51
- Making large-scale SVM learning practical. **JOACHIMS, T.** Advances in Kernel Methods - Support Vector Learning. MIT Press, 1999, 169-184
- **MIRKIN et al.** Source-language entailment modeling for translating unknown terms. *Proc. Joint Conf. 47th Annual Meeting of the ACL and the 4th Intern'l Joint Conf. on Natural Language Processing of the AFNLP,* 2009, 791-799
- **AZIZ et al.** Learning an expert from human annotations in statistical machine translation: the case of out-of-vocabulary words. *Proc. 14th Annual Meeting of the European Association for Machine Translation (EAMT),* 2010
- **FENG, L.** Text Simplification: A survey. *Technical report,* 2008
- Translating from complex to simplified sentences. **SPECIA, L.** Intern'l Conf. on Computational Processing of the Portuguese Language (PROPOR), Lecture Notes in Artificial Intelligence. Springer, 2010, vol. 6001, 30-39
- **ZHU et al.** A monolingual tree-based translation model for sentence simplification. *Proc. 23rd Intern'l Conf. on Computational Linguistics (Coling 2010),* 2010, 1353-1361
- **DAGAN et al.** Recognizing textual entailment: Rationale, evaluation and approaches. *Natural Language Engineering,* 2009, vol. 15 (4), 1-17
- **MIRKIN, S.** Context and Discourse in Textual Entailment Inference. *PhD thesis,* 2011
- **STERN ; DAGAN.** BIUTEE: A modular open-source system for recognizing textual entailment. *Proc. ACL 2012 System Demonstrations,* 2012, 73-78
- **LOTAN, A.** A syntax-based rule-base for textual entailment and a semantic truth value annotator. *Master's thesis,* 2012
- **MIRKIN et al.** Classification-based contextual preferences. *Proc. TextInfer 2011 Workshop on Textual Entailment,* 2011, 20-29